# EUROPEAN PATENT APPLICATION

(11) **EP 2 770 678 A1**
(43) Date of publication of application: **27.08.2014**
(21) Application number: 12842457.9
(22) Date of filing: 05.07.2012
(51) Int. Cl.: H04L 12/70

(54) **CLOCK SYNCHRONIZATION METHOD AND SYSTEM IN 1588-2008 PROTOCOL**

(30) Priority: 17.10.2011 CN 201110314766
(71) Applicant: ZTE Corporation, Shenzhen, Guangdong 518057 (CN)
(72) Inventor: BAI, Lei, Shenzhen Guangdong 518057 (CN); LUO, Li, Shenzhen Guangdong 518057 (CN); FU, Xiaoming, Shenzhen Guangdong 518057 (CN)
(74) Representative: Modiano, Micaela Nadia
(86) International application number: PCT/CN2012/078254
(87) International publication number: WO 2013/056575

(57) **Abstract**

A method and system for clock synchronization in a 1588-2008 protocol are provided. The method includes: when a signaling message negotiation mechanism is not used in unicast communication, a slave clock device receiving a PTP message sent from a master clock device and acquires an average message interval field value in the PTP message, detecting a state of a clock link between the slave clock device and the master clock device according to the actual interval of the PTP message, initiating a synchronization operation according to the state of the clock link to obtain synchronization information, and adjusts a local clock of the slave clock device according to the synchronization information. By way of the present invention, a slave clock device can precisely acquire the value of the average message interval field when a master clock device sends each message, and thus precisely acquires the interval at which the master clock device sends the PTP message, and completes the adjustment of the local clock according to the obtained value of the average message interval field, and finally realizes the effect that the local clock of the slave clock device synchronizes with the opposite-end clock of the master clock device.

## Description

### Technical Field

The present invention relates to the field of communications and in particular to a method and system for clock synchronization in a 1588-2008 protocol.

### Background

Currently, the requirements on clock synchronization and time synchronization by a base station can be met by a plurality of means, including a physical clock (such as an external clock input, a synchronization Ethernet and so on), and a packet recovery clock (such as 1588v2 and so on). Compared with the traditional clocking technologies, IEEE1588v2 has evident advantages. When a GPS time synchronization system with a unidirectional channel is adopted, although the obtaining of a synchronization signal is stable and reliable and has high precision, the adoption of the GPS time synchronization system is high in the cost (equipment, installation, maintenance costs), difficult in the construction (the base station is placed at the basement), and high in the failure rate; moreover, there is also safety risk.

IEEE1588v2 which employs a bidirectional channel can reach ns level precision, has low cost, and can be adapted to different access environments and so on. Under the industry background of the requirements on precision increasingly continuously, 1588 has become an inevitable development trend.

IEEE 1588v2 is a master/slave synchronization system. During the synchronization process of the system, a master clock device periodically sends a PTP (Precision Time Protocol) message to issue a time synchronization protocol and time information, and a slave clock device port receives the timestamp information sent from the master clock device port, and the system calculates the time delay between the master and the slave on the line and the time difference between the master and the slave and uses this time difference to adjust the local time, so that the slave device time is kept consistent with the master device time in both frequency and phase.

IEEE1588 can realize frequency synchronization and time synchronization simultaneously. The precision assurance of time transfer mainly relies on two conditions: accurate counter frequency and link symmetry. In addition, for the slave device, during the entire clock synchronization, the time interval at which the master device sends each PTP message usually needs to be defined in, for example, the logMessageInterval (average message interval) field in the common header of the PTP message in the 1588v2 protocol, so that link quality detection can be performed based on the time interval, and this time interval may also be applied in the synchronization algorithm.

**Table 1**

| **Message Type** | **Value of logMessageInterval** |
|---|---|
| Announce (Announce message) | The value of the portDS.logAnnounceInterval member of the data set (same as the value of the Annnounce Interval field in the data set of the port) |
| Sync (Synchronization message), Follow_Up (Follow up message) | The value of the portDS.logSyncInterval member of the data set in a multicast message, and 7**F16** in a unicast message (same as the value of the Sync Interval field in the data set of the port during multicast, and the value being Ox7F during unicast) |
| Delay_Resp (Delay response message) | The value of the portDS .logMinDelayReqInterval member of the data set in a multicast message, and 7**F16** in a unicast message (same as the value of the Delay_Resp minimum average Interval field in the data set of the port during multicast, and the value being Ox7F during unicast) |
| Delay_Req (Delay request message) | 7**F16** |
| Signaling (Signaling message) | 7**F16** |
| Management (Management message) | 7**F16** |
| Pdelay_Req (Peer delay request message) | 7**F16** |
| Pdelay_Resp (Peer delay response message) | 7**F16** |
| Pdelay_Resp_Follow_Up (Peer delay response Follow up message) | 7**F16** |

During practical application, a multicast manner or a unicast manner can be used when performing clock synchronization or time synchronization using 1588.

It can be seen from Table 1 that during communication in a multicast manner, the logMessageInterval thereof can be carried in the common header thereof, and during communication in a multicast manner, the opposite end is informed of the sending intervals of the Announce, Sync, Follow up and Delay_Resp in the PTP message which are filled in the common header.

During communication in a unicast negotiation mechanism, the logMessageInterval fields of the Announce, Sync, Follow up and Delay_Resp in the PTP message can be determined by signaling negotiation, and at the same time, during a handshake process, the slave clock device can acquire the sending interval at which the master clock device sends the messages.

In addition, during communication in a unicast manner, the signaling negotiation mechanism is an optional mechanism but not a mechanism necessarily to be initiated, and therefore, under a certain scenario, many devices will initiate a unicast non-negotiation mechanism. In such a case, the logMessageInterval fields in the common headers of Sync, Follow up, and Delay_Resp are fixedly filled with 7**F16**.

During the implementation of the present invention, the applicant finds that the above technology has the following technical problems.

In the current IEEE Std 1588™-2008 standard protocol, when the negotiation mechanism is not used in the unicast communication, the slave clock device cannot precisely acquire the value of the logMessageInterval field at which the master clock device sends respective messages, and thus cannot acquire the sending interval of the PTP message in real time and precisely. In such a case, the slave clock device cannot precisely implement link quality detection and synchronization algorithm control, which will affect the accuracy and precision of clock synchronization and time synchronization between the local clock of the slave clock device and the opposite-end clock of the slave clock device.

### Summary

The present invention provides a method and system for clock synchronization in a 1588-2008 protocol and a method and system for acquiring an actual interval of a PTP message in a 1588-2008 protocol. By virtue of the above solutions, when a negotiation mechanism is not used in the unicast communication in the IEEE Std 1588™-2008 standard protocol, a slave clock device can precisely acquire the value of the logMessageInterval field at which the master clock device sends each message, and thus acquire the sending interval of the PTP message precisely, thereby realizing clock synchronization and time synchronization between the local clock of the slave clock device and the opposite-end clock of the slave clock device.

The method for clock synchronization in a 1588-2008 protocol is applied in the case where a negotiation mechanism is not used in unicast communication, and the method includes: receiving a Precision Time Protocol (PTP) message sent from a master clock device and acquiring an average message interval field value in the PTP message, wherein the average message interval field value is used for indicating an actual interval at which the master clock device sends the PTP message; determining the actual interval at which the master clock device sends the PTP message according to the average message interval field value; detecting a state of a clock link between a slave clock device and the master clock device according to the actual interval of the PTP message; and initiating a synchronization operation according to the state of the clock link to obtain synchronization information, and adjusting a local clock of the slave clock device according to the synchronization information to synchronize the local clock with an opposite-end clock of the master clock device.

Preferably, detecting the state of the clock link between the slave clock device and the master clock device according to the actual interval of the PTP message includes: acquiring a packet loss rate according to the actual interval of the PTP message and the number of received PTP messages; and determining the state of the clock link between the slave clock device and the master clock device according to the packet loss rate.

Preferably, acquiring the packet loss rate according to the actual interval of the PTP message and the number of the received PTP messages includes: calculating a first PTP message number according to the actual interval of the PTP message, wherein the first PTP message number is the number of PTP messages sent by the master clock device within a set time; counting a second PTP message number, wherein the second PTP message number is the number of PTP messages sent by the master clock device which are actually received within the set time; and acquiring the packet loss rate according to the first PTP message number and the second PTP message number.

Preferably, determining the state of the clock link between the slave clock device and the master clock device according to the packet loss rate includes: judging whether the packet loss rate exceeds a preset threshold, and if the packet loss rate does not exceed the preset threshold, then determining that the clock link between the slave clock device and the master clock device is in a connected state; and if the packet loss rate exceeds the preset threshold, then determining that the clock link between the slave clock device and the master clock device is in a disconnected state.

Preferably, initiating a synchronization operation according to the state of the clock link to obtain synchronization information, and adjusting a local clock of the slave clock device according to the synchronization information includes: if it is determined that the clock link between the slave clock device and the master clock device is in the connected state, then initiating the synchronization operation; and acquiring timestamp information in the PTP message, performing the synchronization operation using the acquired timestamp information to obtain the synchronization information, and adjusting the local time of the slave clock device using the synchronization information.

Preferably, the synchronization information is time delay and time error between the master clock device and the slave clock device.

A method for acquiring an actual interval of a Precision Time Protocol (PTP) message in a 1588-2008 protocol includes: a master clock device sending a PTP message to a slave clock device, wherein the PTP message includes an average message interval field value, and the average message interval field value is used for indicating an actual interval at which the master clock device sends the PTP message; and the slave clock device receiving the PTP message and determining the actual interval at which the master clock device sends the PTP message according to the average message interval field value in the PTP message.

A system for clock synchronization in a 1588-2008 protocol includes: a receiving unit configured to receive a Precision Time Protocol (PTP) message sent by a master clock device and acquire an average message interval field value in the PTP message, wherein the average message interval field value is used for indicating an actual interval at which the master clock device sends the PTP message; a determination unit configured to determine the actual interval at which the master clock device sends the PTP message according to the average message interval field value in the PTP message; a detection unit configured to detect a state of a clock link between the slave clock device and the master clock device according to the actual interval of the PTP message; an acquisition unit configured to initiate a synchronization operation according to the state of the clock link to obtain synchronization information; and an adjustment unit configured to adjust a local clock of the slave clock device according to the synchronization information to synchronize a clock of the slave clock device with a clock of the master clock device.

Preferably, the adjustment unit includes: an information obtainer configured to obtain timestamp information according to the PTP message; and a synchronization operator configured to obtain the synchronization information according to the timestamp information and the synchronization operation.

A system for acquiring an actual interval of a Precision Time Protoco (PTP) message in a 1588-2008 protocol includes: a master clock configured to send a PTP message to a slave clock device, wherein the PTP message includes an average message interval field value, and the average message interval field value is used for indicating an actual interval at which the master clock device sends the PTP message; and a slave clock configured to receive the PTP message and determine the actual interval at which the master clock device sends the PTP message according to the average message interval field value in the PTP message.

By virtue of the above solution, a slave clock device can precisely acquire the value of the average message interval field at which a master clock device sends each message, and thus precisely acquires the interval at which the master clock device sends the PTP message, and completes the adjustment of the local clock according to the obtained value of the average message interval field, and finally realizes the effect that the local clock of the slave clock device synchronizes with the opposite-end clock of the master clock device.

### Description of the accompanying drawings

Fig. 1 is a flowchart of a method for acquiring an actual interval of a PTP message in a 1588-2008 protocol in an embodiment of the present invention;
Fig. 2 is a schematic diagram showing the configuration of a message interval value in a 1588-2008 protocol in an embodiment of the present invention;
Fig. 3 is a structural schematic diagram of a system for acquiring an actual interval of a PTP message in a 1588-2008 protocol in an embodiment of the present invention;
Fig. 4 is a flowchart of a method for clock synchronization in a 1588-2008 protocol in an embodiment of the present invention;
Fig. 5 is a structural schematic diagram of a system for clock synchronization in a 1588-2008 protocol in an embodiment of the present invention; and
Fig. 6 is a particular structural schematic diagram of an adjustment unit in a system for clock synchronization in a 1588-2008 protocol in an embodiment of the present invention.

### Detailed Description of the Embodiments

The embodiments of the present invention provide a method for acquiring an actual interval of a PTP message in a 1588-2008 protocol, so that a slave clock device can obtain an actual interval at which a master clock device sends a PTP message in the case where a signaling message negotiation mechanism is not used during communication in a unicast manner (unicast communication).

The technical solution of the present invention will be described in detail in conjunction with the drawings and particular embodiments hereinafter.

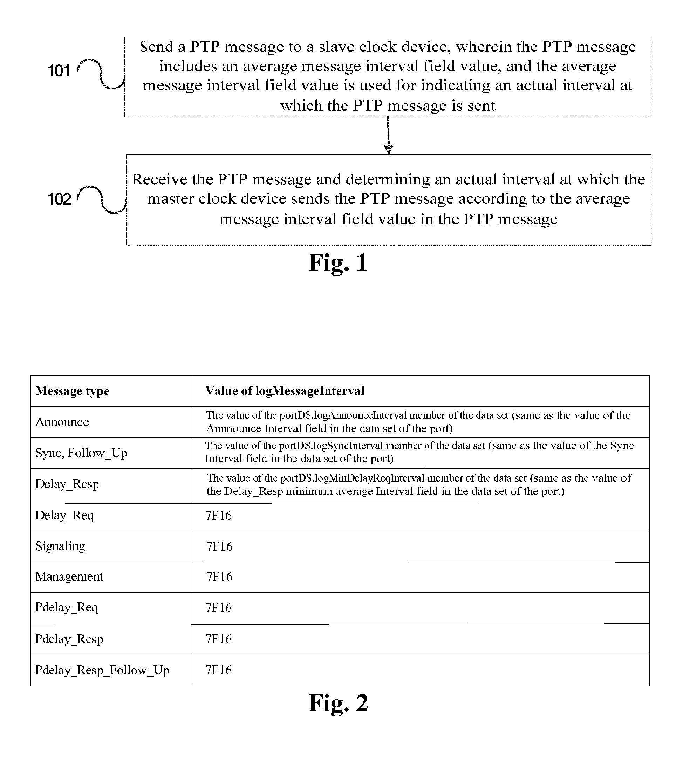

As shown in Fig. 1, an embodiment of the present invention provides a method for acquiring an actual interval of a PTP message in a 1588-2008 protocol, so that a slave clock device can obtain an actual interval at which a master clock device sends a PTP message in the case where a signaling message negotiation mechanism is not used during communication in a unicast manner.

Step 101, a master clock device sends a PTP message to a slave clock device, wherein the PTP message includes an average message interval field value, and the average message interval field value is used for indicating an actual interval at which the master clock device sends the PTP message.

In an IEEE 1588v2 synchronization system, a master clock device will periodically sends a PTP (Precision Time Protocol) message to issue a time synchronization protocol and time information.

In an embodiment of the present application, when a negotiation mechanism is not used in unicast communication, the master clock device sends a PTP message to the slave clock device, in order to enable the slave clock device to obtain an actual interval at which the PTP message is sent, the PTP message sent by the master clock device contains an average message interval field, wherein the average message interval field value is used for indicating an actual interval at which the master clock device sends the PTP message.

Step 102, the slave clock device receives the PTP message and determines the actual interval at which the master clock device sends the PTP message according to the average message interval field value in the PTP message.

After the slave clock device receives the PTP message, it acquires the actual interval at which the master clock device sends the PTP message according to the average message interval field value in the PTP message, and the slave clock device can calculate an actual interval between the master clock device sending the PTP message for the first time and sending the PTP message for the second time according to the actual interval of the PTP message.

Hereinafter, a method for acquiring an actual interval of a PTP message to be used for clock synchronization in a 1588-2008 protocol proposed in the present application will be described in detail in conjunction with a particular application environment.

As shown in Fig. 2, it is a schematic diagram of the configuration of a message interval value, and in an embodiment of the present application, a message interval value is configured for a message to be used during clock synchronization, the particular configuration of which is as follows:
the message interval value of Announce is: The value of the portDS.logAnnounceInterval member of the data set (same as the value of the Annnounce Interval field in the data set of the port);
the message interval values of Sync and Follow up are: The value of the portDS.logSyncInterval member of the data set (same as the value of the Sync Interval field in the data set of the port);
the message interval value of Delay_Resp is: The value of the portDS.logMinDelayReqInterval member of the data set (same as the value of the Delay_Resp minimum average Interval field in the data set of the port);
with the above configuration, in an IEEE Std 1588™-2008 standard protocol, in the case where a negotiation mechanism is not used in the unicast communication, PTP messages such as the Announce, Sync, Follow up and Delay_Resp sent by the master clock device contain the average interval field value.

The slave clock device acquires the average interval field value of Announce, Sync, Follow up and Delay_Resp in the PTP message sent by the master clock device and determines the actual interval at which the master clock device sends each PTP message according to the average interval field value.

In particular, the master clock device sends a Sync to the slave clock device, wherein the Sync contains a Sync average interval field, and the slave clock device obtains the Sync and then reads the actual interval of the Sync in the Sync average interval field (that is, the actual time interval between the master clock device sending the first Sync and sending the second Sync). In this way, the slave clock device obtains the actual interval of the Sync.

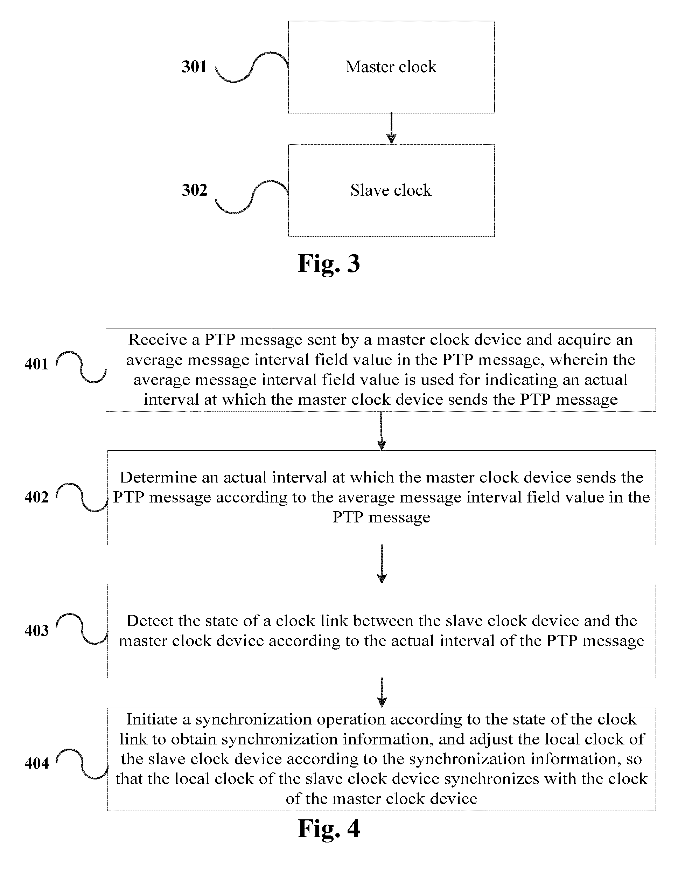

As shown in Fig. 3, corresponding to the method for acquiring an actual interval of a PTP message in a 1588-2008 protocol provided in the embodiment of the present invention, an embodiment of the present invention also provide a system for acquiring an actual interval of a PTP message in a 1588-2008 protocol, including the following functional units.

A master clock 301 is configured to send a PTP message to a slave clock device, wherein the PTP message includes an average message interval field value, and the average message interval field value is used for indicating an actual interval at which the PTP message is sent.

A slave clock 302 is configured to receive the PTP message and determine the actual interval at which the master clock device sends the PTP message according to the average message interval field value in the PTP message.

In the case where a signaling message negotiation mechanism is not used during communication in a unicast manner, a master clock sends a PTP message to a slave clock device, wherein the PTP message includes an average message interval field value, and the average message interval field value is used for indicating an actual interval at which the PTP message is sent; and a slave clock receives the PTP message and determines the actual interval at which the master clock device sends the PTP message according to the average message interval field value in the PTP message. By virtue of the above solution, a slave clock device can precisely acquire the average message interval field value in each message sent by the master clock device, and thus precisely acquires the interval at which the master clock device sends PTP messages.

An embodiment of the present invention provides a method for clock synchronization in a 1588-2008 protocol, so that a slave clock device can obtain an actual interval at which a master clock device sends a PTP message in the case where a signaling message negotiation mechanism is not used during communication in a unicast manner.

As shown in Fig. 4, an embodiment of the present invention provide a method for clock synchronization in a 1588-2008 protocol, so that in the case where a negotiation mechanism is not used in the unicast communication, a slave clock device receives a PTP message sent by a master clock device, thus realizing the clock synchronization between the slave clock device and the master clock device, and the particular steps are as follows.

Step 401, a PTP message sent by a master clock device is received and an average message interval field value in the PTP message is acquired, wherein the average message interval field value is used for indicating an actual interval at which the master clock device sends the PTP message.

Step 402, an actual interval at which the master clock device sends the PTP message is determined according to the average message interval field value in the PTP message.

Step 403, a state of a clock link between the slave clock device and the master clock device is detected according to the actual interval of the PTP message.

Step 404, a synchronization operation is initiated according to the state of the clock link to obtain synchronization information, and the local clock of the slave clock device is adjusted according to the synchronization information, so that the local clock synchronizes with the opposite-end clock of the master clock device.

In this embodiment, the slave clock device determines the state of the clock link between itself and the master clock device according to the packet loss rate. Therefore, before detecting the state of the clock link between the slave clock device and the master clock device, the slave clock device needs to obtain a link packet loss rate between itself and the master clock device.

In an embodiment of the present invention, a packet loss rate is acquired according to the actual interval of the PTP message and the number of received PTP messages. The particular implementation is: a slave clock device calculates a first PTP message number according to the actual interval of the PTP message, wherein the first PTP message number is the number of PTP messages sent by the master clock device within a set time (the first PTP message number is the number of PTP messages sent by the master clock device within the set time that is predicted by the slave clock device according to the actual interval), and counts a second PTP message number, wherein the second PTP message number is the number of PTP messages sent by the master clock device that are actually received within the set time (the second PTP message number is the number of PTP messages sent by the master clock device that are actually received within the preset time and counted and determined by the slave clock device), and thereby obtains a packet loss rate according to the first PTP message number and the second PTP message number.

After obtaining the link packet loss rate, the slave clock device judges whether the packet loss rate exceeds a preset threshold, if no, then the clock link between the slave clock device and the master clock device is in a connected state; and if yes, then the clock link between the slave clock device and the master clock device is in a disconnected state.

With the above method, the slave clock device can precisely determine the current quality situation of the clock link according to the packet loss rate of the clock link, and if it is determined that the state of the clock link between the slave clock device and the master clock device is in the connected state, then a synchronization operation will be initiated.

After detecting that the clock link between the slave clock device and the master clock device is in a connected state, the slave clock device acquires timestamp information from the received PTP message and performs a synchronization operation using the timestamp information to obtain synchronization information; and then applies the synchronization information to adjust the local time, so that the local clock synchronizes with the clock of the master clock device.

In this embodiment, the synchronization information is the time delay and time error between the master clock device and the slave clock device.

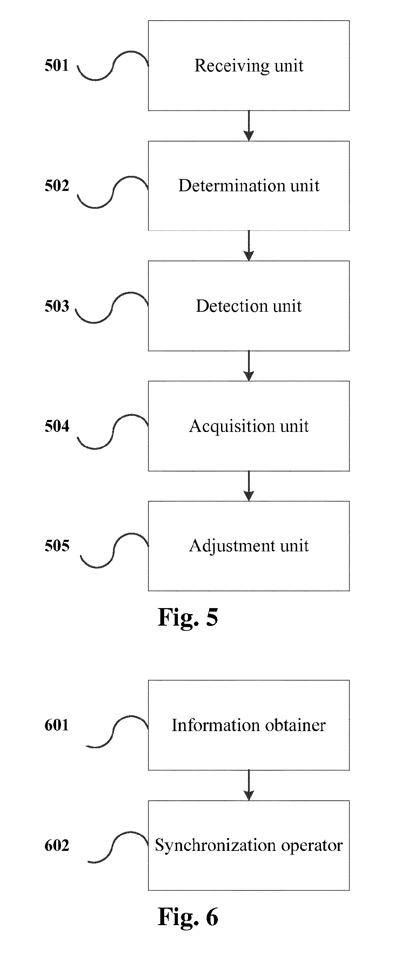

Referring to Fig. 5, corresponding to the method for clock synchronization in a 1588-2008 protocol provided in an embodiment of the present invention, an embodiment of the present invention also provide a system for clock synchronization in a 1588-2008 protocol, including the following functional units.

A receiving unit 501 is configured to receive a PTP message sent by a master clock device and acquire an average message interval field value in the PTP message, wherein the average message interval field value is used for indicating an actual interval at which the master clock device sends the PTP message.

A determination unit 502 is configured to determine an actual interval at which the master clock device sends the PTP message according to the average message interval field value in the PTP message.

A detection unit 503 is configured to detect a state of a clock link between the slave clock device and the master clock device according to the actual interval of the PTP message.

An acquisition unit 504 is configured to initiate a synchronization operation according to the state of the clock link to obtain synchronization information.

An adjustment unit 505 is configured to adjust the local clock of the slave clock device according to the synchronization information, so that the clock of the slave clock device synchronizes with the clock of the master clock device.

As shown in Fig. 6, it is a particular structural schematic diagram of the adjustment unit 505 in the system of this embodiment, wherein the adjustment unit 505 further includes:
an information obtainer 601 configured to obtain timestamp information according to the PTP message; and
a synchronization operator 602 configured to obtain synchronization information according to the timestamp information and the synchronization operation.

The technical effects achieved by the technical solution of the present invention are as follows: in the embodiments of the present invention, in the case where a negotiation mechanism is not used in the unicast communication, a PTP message sent from a master clock device is received and an average message interval field value in the PTP message is acquired, wherein the average message interval field value is used for indicating the actual interval at which the master clock device sends the PTP message; the actual interval at which the master clock device sends the PTP message is determined according to the average message interval field value; a state of a clock link between the slave clock device and the master clock device is detected according to the actual interval of the PTP message; and a synchronization operation is initiated according to the state of the clock link to obtain synchronization information, and the local clock of the slave clock device is adjusted according to the synchronization information, so that the local clock synchronizes with the opposite-end clock of the master clock device.

By virtue of the above solution, a slave clock device can precisely acquire the value of the average message interval field at which a master clock device sends each message, and thus precisely acquires the interval at which the master clock device sends the PTP message, and completes the adjustment of the local clock according to the obtained average message interval field value, and finally synchronizes the local clock of the slave clock device with the opposite-end clock of the master clock device.

Apparently, those skilled in the art can make various modifications and variations to the present invention without departing from the scope of the present invention. Thus, if these modifications and variations of the present invention belong to the scope of the claims of the present invention and an equivalent technology thereof, then the present invention is also intended to contain these modifications and variations.

## Claims

1. A method for clock synchronization in a 1588-2008 protocol, applied in a case where a negotiation mechanism is not used in unicast communication, **characterized in that** the method comprises:
receiving a Precision Time Protocol (PTP) message sent from a master clock device and acquiring an average message interval field value in the PTP message, wherein the average message interval field value is used for indicating an actual interval at which the master clock device sends the PTP message;
determining the actual interval at which the master clock device sends the PTP message according to the average message interval field value;
detecting a state of a clock link between a slave clock device and the master clock device according to the actual interval of the PTP message; and
initiating a synchronization operation according to the state of the clock link to obtain synchronization information, and adjusting a local clock of the slave clock device according to the synchronization information to synchronize the local clock with an opposite-end clock of the master clock device.

2. The method as claimed in claim 1, **characterized in that** detecting the state of the clock link between the slave clock device and the master clock device according to the actual interval of the PTP message comprises:
acquiring a packet loss rate according to the actual interval of the PTP message and the number of received PTP messages; and
determining the state of the clock link between the slave clock device and the master clock device according to the packet loss rate.

3. The method as claimed in claim 2, **characterized in that** acquiring the packet loss rate according to the actual interval of the PTP message and the number of the received PTP messages comprises:
calculating a first PTP message number according to the actual interval of the PTP message, wherein the first PTP message number is the number of PTP messages sent by the master clock device within a set time;
counting a second PTP message number, wherein the second PTP message number is the number of PTP messages sent by the master clock device which are actually received within the set time; and
acquiring the packet loss rate according to the first PTP message number and the second PTP message number.

4. The method as claimed in claim 2, **characterized in that** determining the state of the clock link between the slave clock device and the master clock device according to the packet loss rate comprises:
judging whether the packet loss rate exceeds a preset threshold, and if the packet loss rate does not exceed the preset threshold, then determining that the clock link between the slave clock device and the master clock device is in a connected state; and if the packet loss rate exceeds the preset threshold, then determining that the clock link between the slave clock device and the master clock device is in a disconnected state.

5. The method as claimed in claim 4, **characterized in that** initiating a synchronization operation according to the state of the clock link to obtain synchronization information, and adjusting a local clock of the slave clock device according to the synchronization information comprises:
if it is determined that the clock link between the slave clock device and the master clock device is in the connected state, then initiating the synchronization operation; and
acquiring timestamp information in the PTP message, performing the synchronization operation using the acquired timestamp information to obtain the synchronization information, and adjusting the local time of the slave clock device using the synchronization information.

6. The method as claimed in claim 5, **characterized in that** the synchronization information is time delay and time error between the master clock device and the slave clock device.

7. A method for acquiring an actual interval of a Precision Time Protoco (PTP) message in a 1588-2008 protocol, **characterized by** comprising:
a master clock device sending a PTP message to a slave clock device, wherein the PTP message comprises an average message interval field value, and the average message interval field value is used for indicating an actual interval at which the master clock device sends the PTP message; and
the slave clock device receiving the PTP message and determining the actual interval at which the master clock device sends the PTP message according to the average message interval field value in the PTP message.

8. A system for clock synchronization in a 1588-2008 protocol, **characterized by** comprising:
a receiving unit configured to receive a Precision Time Protocol (PTP) message sent by a master clock device and acquire an average message interval field value in the PTP message, wherein the average message interval field value is used for indicating an actual interval at which the master clock device sends the PTP message;
a determination unit configured to determine the actual interval at which the master clock device sends the PTP message according to the average message interval field value in the PTP message;
a detection unit configured to detect a state of a clock link between the slave clock device and the master clock device according to the actual interval of the PTP message;
an acquisition unit configured to initiate a synchronization operation according to the state of the clock link to obtain synchronization information; and
an adjustment unit configured to adjust a local clock of the slave clock device according to the synchronization information to synchronize a clock of the slave clock device with a clock of the master clock device.

9. The system as claimed in claim 8, **characterized in that** the adjustment unit comprises:
an information obtainer configured to obtain timestamp information according to the PTP message; and
a synchronization operator configured to obtain the synchronization information according to the timestamp information and the synchronization operation.

10. A system for acquiring an actual interval of a Precision Time Protocol (PTP) message in a 1588-2008 protocol, **characterized by** comprising:
a master clock configured to send a PTP message to a slave clock device, wherein the PTP message comprises an average message interval field value, and the average message interval field value is used for indicating an actual interval at which the master clock device sends the PTP message; and
a slave clock configured to receive the PTP message and determine the actual interval at which the master clock device sends the PTP message according to the average message interval field value in the PTP message.
